# EUROPÄISCHE PATENTSCHRIFT

(11) **EP 1 649 411 B1**
(45) Veröffentlichungstag und Bekanntmachung des Hinweises auf die Patenterteilung: **27.12.2006**
(21) Anmeldenummer: 04763568.5
(22) Anmeldetag: 28.07.2004
(51) Int. Cl.: G06K 19/07, G06K 7/00

(54) **VERFAHREN ZUR REDUKTION DES STROMVERBRAUCHS EINES MOBILEN DATENSPEICHERS, ANWENDUNG DES VERFAHRENS IN EINEM IDENTIFIKATIONSSYSTEM MIT ZUMINDEST EINEM SCHREIB-/ LESEGERÄT UND EINEM MOBILEN DATENSPEICHER**
METHOD FOR REDUCTION OF THE POWER CONSUMPTION OF A MOBILE DATA MEMORY APPLICATION OF THE METHOD TO AN IDENTIFICATION SYSTEM WITH AT LEAST ONE READ/WRITE DEVICE AND A MOBILE DATA MEMORY
PROCEDE DE REDUCTION DE LA CONSOMMATION DE COURANT D'UNE MEMOIRE DE DONNEES MOBILE, UTILISATION DUDIT PROCEDE DANS UN SYSTEME D'IDENTIFICATION AVEC AU MOINS UN DISPOSITIF D'ECRITURE/DE LECTURE ET UNE MEMOIRE DE DONNEES MOBILE

(30) Priorität: 28.07.2003 DE 10334398
(43) Veröffentlichungstag der Anmeldung: 26.04.2006
(73) Patentinhaber: SIEMENS AKTIENGESELLSCHAFT, 80333 München (DE)
(72) Erfinder: BAUMGARTNER, Josef, A-1160 Wien (AT); GILA, Janos, A-2340 Mödling (AT)
(86) Internationale Anmeldenummer: PCT/EP2004/008455
(87) Internationale Veröffentlichungsnummer: WO 2005/013190

(56) Entgegenhaltungen:
- WO-A-01/45280
- US-A- 5 212 373

## Beschreibung

Die Erfindung betrifft ein Verfahren zur Reduktion des Stromverbrauchs eines mobilen Datenspeichers zur kontaktlosen Datenübertragung mit einem Schreib-/Lesegerät. Die Erfindung betrifft weiterhin einen mobilen Datenspeicher sowie ein Identifikationssystem mit zumindest einem Schreib-/Lesegerät und einem mobilen Datenspeicher.

Als Stand der Technik sind zudem Identifikationssysteme bekannt, die ein oder mehrere stationäre Schreib-/Lesegeräte enthalten, welche Daten mit mobilen Datenspeichern über eine in der Regel auf Funk basierenden Datenübertragungsstrecke berührungslos austauschen. Derartige Systeme werden in technischen Einrichtungen eingesetzt, in welchen eine Vielzahl von Objekten bzw. Güter möglichst schnell und frei bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr.

Ein Beispiel für ein derartiges Identifikationssystem ist im, WO 01/45280 und ISO-18000-4-MOD3-Standard mit dem Titel "Radio-frequency Identification Standard for Item Management - Air Interface" beschrieben.

In der Norm ist vorgesehen, dass durch das Schreib-/Lesegerät eine Abfrage auf Vorhandensein eines mobilen Datenspeichers im Erfassungsbereich erfolgt. Dazu sendet das Schreib-/Lesegerät ein unmoduliertes Trägersignal mit einer vorgebbaren Backscatter-Frequenz von z.B. 2,45 GHz aus. Dieses Signal kann passiv von einem im Empfangsbereich befindlichen mobilen Datenspeicher z.B. durch sog. "Backscattering" zum Schreib-/Lesegerät zurückgesendet werden.

Unabhängig davon moduliert der mobile Datenspeicher die Impedanz einer integrierten Sende-/Empfangsantenne in zyklischen Sequenzen mit einer signifikanten Erkennungssequenz zur Identifizierung des mobilen Datenspeichers bei einem Schreib-/Lesegerät. Zudem erhält das Schreib-/Lesegerät eine Zeitinformation darüber, wann der mobile Datenspeicher seinen Datenempfänger einschalten wird. Ist die zurückgesendete modulierte "Backscatter"-Frequenz vom Schreib-/Lesegerät empfangbar, so wird die Antwort auf Gültigkeit überprüft. Ist dies der Fall, so legt dieses zum Zeitpunkt der erwarteten Empfangsbereitschaft des mobilen Datenspeichers ein datenmoduliertes Trägersignal an. Dieses Signal enthält dabei zum einen die unmodulierte Backscatter-Frequenz und zugleich eine datenmodulierte Kommunikations-Frequenz, welches dem mobilen Datenspeicher signalisiert, dass nun eine Datenübertragung folgen wird. Die übertragenen Daten können dabei z.B. eine Identifikationsnummer des Schreib-/Lesegeräts enthalten. Mittels dieser Identifikationsnummer kann dann z.B. festgestellt werden, ob die zur Übertragung anstehenden Daten für den mobilen Datenspeicher bestimmt sind oder nicht. Für den mobilen Datenspeicher bedeutet dies, dass gültige bzw. nicht gültige Daten anliegen. Auch kann der mobile Datenspeicher während eines Datenempfangs bereits übertragene Daten als ungültig einstufen, falls Unstimmigkeiten z.B. durch Übertragungsfehler erkannt werden.

Ein von der Empfangsantenne des mobilen Datenspeichers empfangenes Signal wird nun zyklisch und in kurzen Abständen auf ein Vorhandensein des datenmodulierten Trägersignals, d.h. auf ein gleichzeitiges Vorhandensein der Backscatter-Frequenz und der datenmodulierten Kommunikations-Frequenz abgefragt. Werden beide Frequenzen detektiert, so bleibt der Datenempfänger des mobilen Datenspeichers für den Datenempfang eingeschaltet.

Der mobile Datenspeicher weist zur Stromversorgung üblicherweise einen Energiespeicher, insbesondere eine Batterie auf. Zur Erzielung einer möglichst langen Betriebsdauer ist es daher notwendig, den Stromverbrauch zu minimieren. Eine bekannte Maßnahme zur Reduzierung des Stromverbrauchs ist z.B. die Auswahl von besonders stromsparenden elektronischen Bauelementen. Außerdem ist bei einem Schaltungsentwurf eines mobilen Datenspeichers zu berücksichtigen, dass für den Datenempfang i.Vgl. zum Datensenden ein vielfach größerer Strom benötigt wird. Im Gegensatz zum sehr geringer Strombedarf für das eingangs beschriebene passive "Backscattering", bei welchem die Antennenimpedanz nur kurzzeitig moduliert wird, müssen für den Datenempfang etliche Schaltkreise zugeschaltet werden. Diese Schaltkreise, wie z.B. Datendemodulator, Verstärker, Mischer etc. benötigen zudem eine Mindestzeit, bis diese eingeschwungen und betriebsbereit sind. Es ist außerdem zu berücksichtigen, dass im Betriebseinsatz eine Datenübertragung zwischen Schreib-/Lesegerät und mobilen Datenspeicher im Allgemeinen nur in Bruchteilen der gesamten Betriebsdauer stattfindet. In der o.g. Norm wird daher empfohlen, den Datenempfänger des mobilen Datenspeichers zur Reduzierung des Stromverbrauchs nur zyklisch und für einen kurzen Zeitraum einzuschalten.

Um gemäß der o.g. Norm einen Datenempfang mit einer Datenrate von 384 Kbit/s zu bewerkstelligen, ist zumindest eine doppelte Empfangstaktfrequenz von 384 KHz erforderlich, um ein Empfangssignals vor einer Demodulation abtasten zu können. Häufig ist aber eine Überabtastung des Eingangssignals unerlässlich, um das Einlesen der Daten mit einer höheren Zuverlässigkeit zu erreichen. Eine mögliche Taktfrequenz wäre dann z.B. das 4- oder 8-fache der o.g. erforderlichen Datenrate. Dies würde dann einer Taktfrequenz von 1,536 MHz bzw. 3,072 MHz entsprechen. Aus dieser Taktfrequenz kann auch die gemäß der Norm für einen zyklischen Sendebetrieb festgelegten 76,8 Kbit/s-Datenrate mittels nachgeschalteter Teiler abgeleitet werden. Aber selbst bei der beispielhaften Taktfrequenz von 1,538 MHz, welche für einen Datenempfang noch befriedigende Werte liefert, liegt der gemittelte Stromverbrauch des zugehörigen Quartz-Oszillators bei ca. 20 bis 30 µA.

Trotz aller zuvor genannten Maßnahmen ist es bis jetzt nicht möglich, den Stromverbrauch so weit zu minimieren, dass auf einen Batteriewechsel während der Lebensdauer des mobilen Datenspeichers verzichtet werden kann. Damit ist der Nachteil verbunden, dass bei erschöpfter Batterie die im mobilen Datenspeicher gespeicherten Daten verloren gehen können.

Ein weiterer Nachteil ist, dass für einen rechtzeitigen Batteriewechsel der mobile Datenspeicher z.B. aus dem Produktionsprozess herausgenommen werden muss. Dadurch können Verzögerungen und Störungen im Prozessverlauf entstehen. Je nach Anwendungsfall und Einsatzgebiet kann dabei die geforderte Lebensdauer eines mobilen Datenspeichers ca. 10 bis 15 Jahren betragen.

Die Aufgabe der Erfindung ist es, ein Verfahren und einen mobilen Datenspeicher anzugeben, durch welche die Betriebsdauer des mobilen Datenspeichers erhöht werden kann.

Erfindungsgemäß wird die Aufgabe mit einem Verfahren zur Reduktion des Stromverbrauchs eines mobilen Datenspeichers zur kontaktlosen Datenübertragung mit einem Schreib-/Lesegerät mit den Merkmalen des Patentanspruchs 1 gelöst.

Bei dem Verfahren wird der mobile Datenspeicher, welcher zumindest einen Energiespeicher und Verbraucher enthält, zumindest für einen zyklischen inaktiven Ruhemodus mit einer ersten Taktfrequenz eines ersten Oszillators versorgt und für den Datenempfang zumindest während einer zyklischen Abfragezeit mit einer zweiten höheren Taktfrequenz eines zweiten Oszillators versorgt. Die höhere Taktfrequenz ist vor allem zur Datenmodulation eines Empfangssignals bestimmt, welches von der Empfangsantenne bzw. von einer kombinierten Sende-/Empfangsantenne des mobilen Datenspeichers stammt.

Die niedrigere Taktfrequenz dagegen dient in erster Linie für das interne Timing, wie z.B. zur Versorung eines "Sleep-Timers" sowie zum Senden der Daten.

Damit ist der Vorteil verbunden, dass nur während einer kurzen Abfragezeit, in welcher geprüft wird, ob sich ein Schreib-/Lesegerät im Umfeld des mobilen Datenspeichers befindet, die zweite Taktfrequenz des zweiten und stromverbrauchsintensiven Oszillators zugeschaltet wird.

Dadurch kann der gemittelte Stromverbrauch des mobilen Datenspeichers erheblich reduziert werden.

In einer weiteren Ausgestaltung des Verfahrens beträgt die zweite Taktfrequenz ein Vielfaches. Dadurch können für das interne Timing beim Senden und Empfangen von Daten die taktabhängigen Schaltungsteile miteinander synchronisiert werden.

In einer vorteilhaften Ausgestaltung des Verfahrens beträgt die zweite Taktfrequenz zumindest das 5-fache und bevorzugt das 40-fache der ersten Taktfrequenz.

Der Vorteil einer i.Vgl. zur ersten Taktfrequenz sehr hohen zweiten Taktfrequenz liegt darin begründet, dass die Einschwingzeit des zugehörigen Oszillators nur einem Bruchteil der Einschwingzeit des Oszillators für die erste Taktfrequenz beträgt.

In einer bevorzugten Ausgestaltung des Verfahrens wird innerhalb der zyklischen Abfragezeit ein Pegel des Empfangssignals gemessen und dann das Empfangssignal datendemoduliert, falls ein Mindestpegel vorliegt. Ist dies der Fall, so kann in vorteilhafter Weise der zweite Oszillator wieder abgeschaltet werden, falls kein Mindestpegel vorliegt. Für die Anwesenheitsabfrage eines kommunikationsbereiten Schreib-/Lesegeräts mittels Pegeldetektion wird nur ein Bruchteil des Versorgungsstroms benötigt, welcher i.Vgl. bei einer vollständigen Datendemodulation benötigt werden würde.

Dadurch ist vorteilhaft eine weitere erhebliche Reduktion des gemittelten Stromverbrauchs des mobilen Datenspeichers und somit eine Erhöhung der gesamten Betriebsdauer des mobilen Datenspeichers möglich.

Vorteilhaft ist dadurch kein Batteriewechsel mehr für die gesamte Lebensdauer des mobilen Datenspeichers erforderlich. Dadurch entfällt auch vorteilhaft der dazu notwendige logistische Aufwand für eine Suche und eine Herausnahme des mobilen Datenspeichers z.B. aus einem Fertigungs- oder Automatisierungsprozess. Mögliche Störungen der Prozessabläufe können dadurch vorteilhaft vermieden werden.

Ein weiterer Vorteil ist, dass keine gespeicherte Daten durch eine erschöpfte Batterie z.B. aufgrund eines versäumten Tauschs der Batterie verloren gehen können.

In einer weiteren Ausgestaltung wird die Datendemodulation des Empfangssignal beendet, falls die demodulierten Lesedaten ungültig sind. Ist dies der Fall, so kann die zweite Taktfrequenz wieder abgeschaltet werden.

In einer bevorzugten Ausgestaltung des Verfahrens wird zu Beginn der Abfragezeit und vor der Datendemodulation des Empfangssignals die zweite Taktfrequenz um eine Einschwingvorlaufzeit zugeschaltet. Die Einschwing- bzw. Einschaltzeit des Datendemodulators bzw. auch der weiteren Schaltungsteile des Datenempfängers ist i.Vgl. zur Einschwingzeit des Oszillators vernachlässigbar. Dadurch kann vorteilhaft ein Zuschalten dieser stromverbrauchsintensiven Schaltungsteile erst am Ende der Einschwingzeit des Oszillators erfolgen.

Das Verfahren kann vorteilhaft in einem Identifikationssystem auf Basis des ISO/IEC 18000-Standards zum Betrieb in einem ISM-Frequenzband, insbesondere in einem ISM-Frequenzband von 2,45 GHz betrieben werden. Insbesondere erfolgt der Datenempfang eines mobilen Datenspeichers in einem S1-Zeitslot gemäß der Norm.

Die Aufgabe wird weiterhin erfindungsgemäß gelöst mit einem mobilen Datenspeicher zur Datenübertragung zu einem Schreib-/Lesegerät mit den Merkmalen des Patentanspruchs 13.

Der mobile Datenspeicher weist zur Datenübertragung zu einem Schreib-/Lesegerät zumindest eine Antenne, einen damit verbundenen Datenempfänger und Datensender, einen Energiespeicher zur Energieversorgung, einen ersten Oszillator mit einer ersten Taktfrequenz insbesondere für einen Zeitgeber und den Datensender des Datenspeichers, einen zweiten Oszillator mit einer zweiten höheren Taktfrequenz insbesondere für den Datenempfänger auf. Zudem weist der Datenspeicher eine Steuerungseinheit, wie z.B. einen Mikrocontroller o.ä. auf, welche zeitweise Schaltungsteile des Datenspeichers an den Energiespeicher schaltet und welche zumindest während einer zyklischen Abfragezeit den zweiten Oszillator an den Energiespeicher schaltet.

In einer Ausführungsform weist der Datenempfänger einen Datendemodulator zur Datendemodulation eines von der Antenne stammenden Empfangssignals auf. Der Datenmodulator ist dabei von der Steuerungseinheit an den Energiespeicher schaltbar.

In einer weiteren Ausführungsform weist der Datenempfänger einen Pegeldetektor zur Pegelmessung des Empfangssignals auf. Der Pegeldetektor ist dabei von der Steuerungseinheit an den Energiespeicher schaltbar.

Zum zeitgesteuerten Zu- bzw. Einschalten der o.g. elektronischen Schaltungsteile des mobilen Datenspeichers, wie z.B. den Datensender, Pegeldetektor, Verstärker und Mischers des Datendemodulators, weist der Datenspeicher einen Zeitgeber oder einen sog. Timer sowie elektronische Schaltmittel auf, welche insbesondere von der Steuerungseinheit ansteuerbar sind. Im Mikrocontroller kann der Zeitgeber z.B. in Form von internen Registern gebildet sein. Auch können beispielsweise die elektronischen Schaltmittel, wie z.B. Transistoren, als Ausgänge eines Ausgabeports im Mikrocontroller integriert sein.

In einer bevorzugten Ausführungsform sind die Oszillatoren Quartzoszillatoren, welche als integrierte elektronische Bauelemente vorteilhaft eine äußerst stabile Taktfrequenz bereitsstellen können.

Mehrere der zuvor genannten mobilen Datenspeicher sowie ein oder mehrere zugehörige Schreib-/Lesegeräte bilden ein aufeinander abgestimmtes Identifkationssystem.

Dies wird in den beiden folgenden Figuren näher erläutert. Dabei zeigt
- FIG 1 :: einen beispielhaften Aufbau eines mobilen Datenspeichers mit zwei Oszillatoren gemäß der Erfindung, und
- FIG 2 :: einen beispielhaften Stromverbrauchsverlauf der erfindungsgemäßen Ausführungsvariante des mobilen Datenspeichers nach FIG 1.

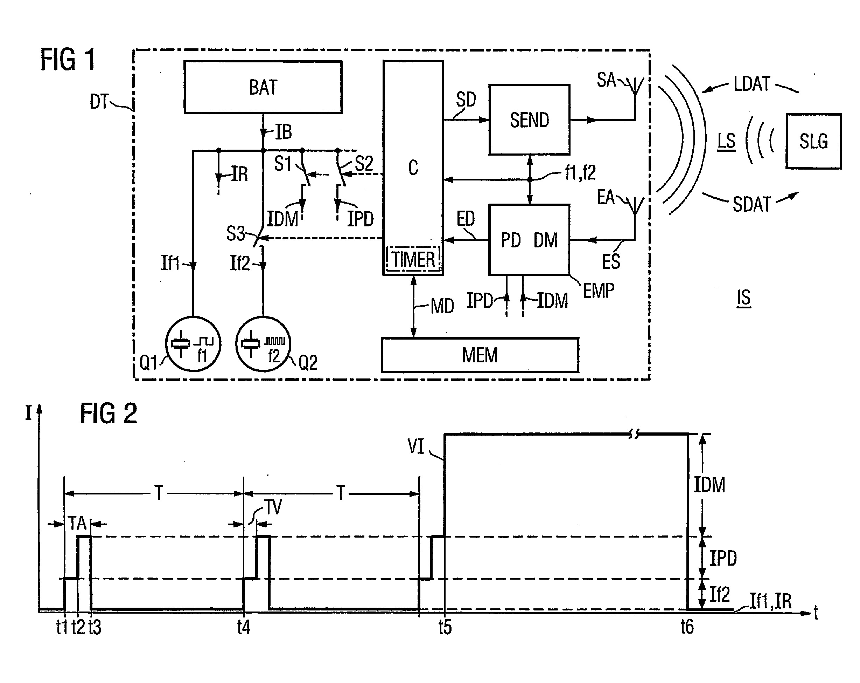

FIG 1 zeigt einen beispielhaften Aufbau eines mobilen Datenspeichers DT, welcher über eine Luftschnittstelle LS Daten mit einem Schreib-/Lesegerät SLG austauschen kann. Mit SDAT werden Schreibdaten bezeichnet, welche der mobile Datenspeicher DT sendet, mit RDAT vom Schreib-/Lesegerät SLG stammende Lesedaten SLG. Das Schreib-/Lesegerät SLG bildet mit zumindest einem mobilen Datenspeicher DT ein Idenitifikationssystem IS.

Zur Datenübertragung mit dem Schreib-/Lesegerät SLG weist der mobile Datenspeicher DT eine Sende- und Empfangsantenne SA,EA auf. Im Beispiel der Figur wird für das Senden und Empfangen der Daten RDAT,SDAT jeweils eine dafür ausgebildete Antenne EA, SA verwendet. An die Antennen SA, EA ist in entsprechender Weise ein Datensender SEND sowie ein Datenempfänger EMP angeschlossen. Des Weiteren weist der mobile Datenspeicher DT eine Steuerungseinheit C als elektronische Datenverarbeitungseinheit auf, welcher die zu sendenden Daten SDAT in digitaler Form über eine beispielhafte Sendedatenleitung SD, wie z.B. über einen Datenbus, an den Datensender SEND überträgt. Der Datensender SEND kann beispielsweise aktiv- oder passivwirkend ausgeführt sein. Die passivwirkende Ausführungsform auf Basis des eingangs genannten Backscattering-Verfahrens weist hierzu vorteilhaft einen besonders geringen Stromverbrauch auf. In umgekehrter Richtung empfängt die Steuerungseinheit C in korrespondierender Weise die Lesedaten RDAT vom Datenempfänger EMP. Dabei wird ein von der Empfangsantenne SA stammendes Empfangsignal ES demoduliert und in digitaler Form aufbereitet. Hierzu weist der Datenempfänger EMP einen Datendemodulator DM, wie z.B. zur Zwischenfrequenzdemodulation des Empfangssignals ES, sowie einen Pegeldetektor PD auf. Zuvor kann das Empfangssignal ES ggf. verstärkt werden. Über eine beispielhafte bidirektionale Speicherdatenleitung MD speichert bzw. lädt die Steuerungseinheit C die ggf. aufbereiteten Lesedaten RDAT bzw. die ggf. aufzubereitenden Schreibdaten SDAT in bzw. aus einem elektronischen Speicher MEM. Dies kann z.B. ein statischer Speicher SRAM, ein EEPROM- oder FRAM-Speicher sein.

Zur Energieversorgung weist der mobile Datenspeicher DT einen Energiespeicher BAT, wie z.B. einen Lithium-Batterie auf. Ein Teil der elektronischen Schaltkreise, wie z.B. ein flüchtiger elektronischer Speicher MEM oder Timer-Bausteine, ist dabei fest mit dem Energiespeicher BAT verbunden, wie z.B. zur Aufrechterhaltung des Speicherinhalts des elektronischen Speichers MEM. Stromverbrauchsintensive elektronische Schaltkreise, wie z.B. der Datendemodulator DM, Verstärker, HF-Mischer etc., können mittels elektronisch ansteuerbarer Schaltmittel S1-S2, wie z.B. mit Schalttransistoren, an den Energiespeicher BAT angeschlossen werden. Es werden dann zur Stromverbrauchsreduktion zyklisch alle für den Datenempfang notwendigen Schaltkreise eingeschaltet, um die Anwesenheit eines Schreib-/Lesegeräts SLG abzufragen. Die Schaltmittel S1-S2 können auch bereits in der beispielhaften Steuerungseinheit C integriert sein. Auch ist es möglich, z.B. Ausgabekanäle der Steuerungseinheits C direkt zur Energieversorgung von elektronischen Schaltkreisen zu verwenden.

Im Beispiel der vorliegenden Figur sind die zugehörigen Ströme IB, IR, IDM, IPD, If1 eingetragen. Dabei ist IB der Gesamtversorgungsstrom, welcher vom Energiespeicher BAT bereitgestellt wird. IR bezeichnet den Ruhestrom, welcher sich durch die Summe der Ruheströme aller elektronischen Bauelemente des mobilen Datenspeichers DT ergibt. Üblicherweise beträgt dieser Ruhestrom IR wenige µA. Mit IDM ist der Versorgungsstrom des Datendemodulators DM bezeichnet, mit IPD der Versorgungsstrom des Pegeldetektors PD. Der Stromverbrauch IP des Pegeldetektors PD liegt dagegen mit einem Faktor von ca. 100 über dem Ruhestrom. Werden zusätzlich für einen Datenempfang alle Komponenten des Datenempfängers EMP, insbesondere der Datendemodulator DM eingeschaltet, so kann sich der gesamte Stromverbrauch um einen weiteren Faktor 10 bis 20 erhöhen.

Gemäß der Erfindung weist der mobile Datenspeicher DT nun zwei Quartz-Oszillatoren Q1,Q2 mit einer ersten und eine zweiten Taktfrequenz f1,f2 anstelle von einem Oszillator als Basis für den Sende- und Empfangstakt auf.

If1 bezeichnet dabei den Versorgungsstrom If1 des ersten Oszillators Q1, welcher eine erste Taktfrequenz f1 für den mobilen Datenspeicher DT bereitstellt. Vor allem ist die erste Taktfrequenz f1 für einen sogenannten "Sleep-Timer" bestimmt, welcher zyklisch den mobilen Datenspeicher DT in den aktiven Sende- und/oder Empfangsmodus versetzt. Zugleich wird aus dieser direkt der Sendetaktakt für das Senden der Daten SDAT abgeleitet. Der erste Oszillator Q1 ist folglich ständig an die Batterie BAT geschaltet und erzeugt somit fortlaufend die erste Taktfrequenz f1. Aus diesem können z.B. mittels nicht weiter dargestellter Teiler- oder Zählerbausteine auch weitere niedrigere Taktfrequenzen zum internen Timing der integrierten elektronischen Schaltkreise abgeleitet werden. Die erste Taktfrequenz f1 beträgt beispielhaft nur 153,6 kHz, für deren Bereitstellung der erste Oszillator Q1 vorteilhaft einen Stromverbrauch von nur etwa 2 bis 3 µA benötigt. Hier gilt in etwa der Grundsatz, dass erzeugte Taktfrequenz und Stromverbrauch eines Oszillators in etwa proportional zu einander sind. Ferner bilden der zuvor genannte Ruhestrom IR sowie dieser Versorgungsstrom If1 einen gemittelten Summenstrom IR,If1 des mobilen Datenspeichers DT, welcher sich im inaktiven Ruhemodus einstellt. Diese Strom IR,If1 beträgt in Summe einige µA.

Der zweite Oszillator Q2 erzeugt nun die zweite Taktfrequenz f2, welche im i.Vgl. zur ersten Taktfrequenz f1 ein Vielfaches ist. Im Beispiel der Figur wird das 40-fache der ersten Taktfrequenz f1, d.h. eine Taktfrequenz von 6,144 MHz verwendet. Der zur Erzeugung benötigt Strom If2 des zweiten Oszillators Q2 beträgt dabei ca. 100 µA. Dadurch aber, dass gemäß der Erfindung der zweite Oszillator Q2 zur Datendemodulation des Empfangssignals ES zyklisch und dann nur für sehr kurze Zeiträume zugeschaltet wird sowie unter Berücksichtigung der Tatsache, dass im Betriebseinsatz eine Datenübertragung zwischen Schreib-/Lesegerät und mobilem Datenspeicher im Allgemeinen nur in Bruchteilen der gesamten Betriebsdauer stattfindet, stellt sich als gemittelter Stromverbrauch für die Takterzeugung ein i.Vgl. zur Lösung nach dem Stand der Technik vorteilhaft erheblich geringerer Teil des Stroms ein.

Der Vorteil der i.Vgl. zur Datenempfangsrate sehr hohen zweiten Taktfrequenz f2 ist , dass eine vielfache Überabtastung - im Beispiel der Figur beträgt diese 16 - möglich ist, so dass eine sehr hohe Empfangsqualität erreicht wird. Zudem ist es ein Vorteil, dass der Quartz-Oszillator Q2 nach Zuschalten der Versorgungsspannung erheblich schneller seinen eingeschwungenen Zustand erreicht als ein Oszillator mit einer i.Vgl. geringen Taktfrequenz.

FIG 2 zeigt einen beispielhaften Stromverbrauchsverlauf VI der erfindungsgemäßen Ausführungsvariante des mobilen Datenspeichers DT nach FIG 1, dessen Stromwert IB über eine Zeitachse t aufgetragen ist. Mit t1 bis t6 sind besondere Zeitpunkte auf der Zeitachse t gekennzeichnet. Aufgrund der betragsmäßig sehr unterschiedlichen Stromwerte für den Ruhestrom IR, die Versorgungsströme If1, If2 der beiden Oszillator Q1,Q2, den Pegeldetektorstrom IPD sowie den Strom IDM des Datendemodulators DM im Datenempfänger EMP ist daher nur eine qualitative Darstellung möglich. If1 und IR sind dabei als ein gemeinsamer Wert eingetragen. Beide Ströme If1,IR sind betragsmäßig in etwa gleich groß und gegenüber den viel grö-βeren anderen Strömen vernachlässigbar. Bei diesen Stromwerten des Stromverbrauchsverlaufs VI befindet sich der mobile Datenspeicher DT im inaktiven Ruhemodus. Zur Abfrage auf Anwesenheit eines Schreib-/Lesegeräts SLG wird nur während einer kurzen zyklischen Abfragezeit TA, ausgelöst durch den "Sleep-Timer" TIMER, in den Bereitschaftsmodus für den Datenempfang geschaltet. Mit T ist dabei die Zykluszeit gekennzeichnet, welche sich bei zu meist erfolgloser Abfrage auf Anwesenheit eines Schreib-/Lesegeräts SLG einstellt. Das Verhältnis zwischen Zykluszeit T und Abfragezeit TA ist als beispielhaft anzusehen, und kann - je nach Ausbildung des mobilen Datenspeichers DT - ein Vielfaches, d.h. das 10- bis 100-fache sein.

Erfindungsgemäß wird während einer Abfragezeit TA der zweite Oszillator Q2 zugeschaltet. Dies ist durch eine sprunghafte Erhöhung des Gesamtstrombedarfs IB des mobilen Datenspeichers DT in den Zeitpunkten t1 und t5 zu sehen. Weiterhin wird der zweite Oszillator Q2 mit einer Vorlaufzeit TV - vom Beginn der Abfragezeit TA an gerechnet - zugeschaltet, bevor erfindungsgemäß nach dem Einschwingen des zweiten Oszillators Q2 eine Pegeldetektor PD zugeschaltet wird. Der Pegeldetektor PD prüft dann während einer kurzen Zeitspanne t2-t3, ob die von einem kommunikationsbereiten Schreib-/Lesegerät SLG ausgesandten charakteristischen Frequenzen entsprechend dem o.g. genannten Standard vorliegen bzw. ob ein Mindestpegel einer aus diesen beiden mittels Zwischenfrequenzdemodulation gebildeten Zwischenfrequenz vorliegt. Ist dies dann der Fall, werden zur vollständigen Datendemodulation der Datendemodulator DM mit den stromintensiven Bauelementen wie Mischer, HF-Vorverstärker etc. mit einem Strombedarf von einigen mA zugeschaltet. Nach Abschluss einer gültigen Datenübertragung oder Erkennen von ungültigen Daten schaltet der mobile Datenspeicher DT wieder im Zeitpunkt t6 in den inaktiven Ruhemodus zurück.

## Patentansprüche

1. Verfahren zur Reduktion des Stromverbrauchs (IB) eines mobilen Datenspeichers (DT) zur kontaktlosen Datenübertragung (SDAT, LDAT) mit einem Schreib-/Lesegerät (SLG), welcher zumindest einen Energiespeicher (BAT) und Verbraucher (EMP, SEND,Q1,Q2,C,MEM) enthält, **dadurch gekennzeichnet, daß** Datenspeicher (DT) zumindest für einen zyklischen (T) inaktiven Ruhemodus (If1, IR) mit einer ersten Taktfrequenz (f1) eines ersten Oszillators (Q1) und für den Datenempfang zumindest während einer zyklischen Abfragezeit (TA) mit einer zweiten höheren Taktfrequenz (f2) eines zweiten Oszillators (Q2) versorgt wird.

2. Verfahren nach Anspruch 1, wobei die höhere Taktfrequenz (f2) zur Datendemodulation eines Empfangssignals (ES) dient.

3. Verfahren nach Anspruch 2, wobei innerhalb der zyklischen (T) Abfragezeit (TA) ein Pegel des Empfangssignals (ES) gemessen wird und dann das Empfangssignal (ES) datendemoduliert wird, falls ein Mindestpegel vorliegt.

4. Verfahren nach Anspruch 3, wobei die zweite Taktfrequenz (f2) wieder abgeschaltet wird, falls kein Mindestpegel vorliegt.

5. Verfahren nach einem der vorangegangenen Ansprüche 2 bis 4, wobei die Datendemodulation des Empfangssignal (ES) beendet wird, falls die demodulierten Lesedaten (LDAT) ungültig sind.

6. Verfahren nach Anspruch 5, wobei die zweite Taktfrequenz (f2) bei ungültigen Lesedaten (RDAT) wieder abgeschaltet wird.

7. Verfahren nach einem der vorangegangenen Ansprüche 2 bis 6, wobei zu Beginn der Abfragezeit (TA) und vor der Datendemodulation des Empfangssignals (ES) die zweite Taktfrequenz (f2) um eine Einschwingvorlaufzeit (TV) vorher zugeschaltet wird.

8. Verfahren nach einem der vorangegangenen Ansprüche, wobei die zweite Taktfrequenz (f2) ein Vielfaches, insbesondere mindestens das 5-fache der ersten Taktfrequenz (f1) ist.

9. Verfahren nach Anspruch 8, wobei die zweite Taktfrequenz (f2) das 40-fache der ersten Taktfrequenz (f1) ist.

10. Verfahren nach einem der vorangegangenen Ansprüche, wobei die erste Taktfrequenz (f1) zum Senden der Daten (SDAT) dient.

11. Anwendung des Verfahrens nach einem der vorangegangenen Ansprüche in einem Identifikationssystem auf Basis des ISO/IEC 18000-Standards zum Betrieb in einem ISM-Frequenzband.

12. Anwendung des Verfahrens nach Anspruch 11, wobei das Identifikationssystem in einem ISM-Frequenzband von 2,45 GHz betrieben wird.

13. Mobiler Datenspeicher (DT) zur Datenübertragung zu einem Schreib-/Lesegerät (SLG), welcher aufweist zumindest eine Antenne (SA,EA), einen damit verbundenen Datenempfänger (EMP) und Datensender (SEND), einen Energiespeicher (BAT) zur Energieversorgung, **dadurch gekennzeichnet daß** der Datenspeicher weiter aufweist einen ersten Oszillator (Q1) mit einer ersten Taktfrequenz (f1) insbesondere für einen Zeitgeber (TIMER) und den Datensender (SEND) des Datenspeichers (DT), einen zweiten Oszillator (Q2) mit einer zweiten höheren Taktfrequenz (f2) insbesondere für den Datenempfänger (EMP), und eine Steuerungseinheit (C), welche zeitweise Schaltungsteile (EMP,SEND) des Datenspeichers (DT) an den Energiespeicher (BAT) schaltet (S1,S2) und welche zumindest während einer zyklischen (T) Abfragezeit (TA) den zweiten Oszillator (Q2) an den Energiespeicher (BAT) schaltet (S3).

14. Mobiler Datenspeicher (DT) nach Anspruch 13, wobei der Datenempfänger (EMP) einen Datendemodulator (DM) zur Datendemodulation eines von der Antenne (EA) stammenden Empfangssignals (ES) aufweist, welcher von der Steuerungseinheit (C) an den Energiespeicher (BAT) schaltbar (S1) ist.

15. Mobiler Datenspeicher (DT) nach Anspruch 14, wobei der Datenempfänger (EMP) einen Pegeldetektor (PD) zur Pegelmessung des Empfangssignals (ES) aufweist, welcher von der Steuerungseinheit (C) an den Energiespeicher (BAT) schaltbar (S2) ist.

16. Mobiler Datenspeicher (DT) nach einem der Ansprüche 13 bis 15, mit elektronischen Schaltmitteln (S1-S3), welche von der Steuerungseinheit (C) ansteuerbar sind.

17. Mobiler Datenspeicher (DT) nach einem der vorangegangenen Ansprüche 13 bis 16, mit einem Zeitgeber (TIMER).

18. Mobiler Datenspeicher (DT) nach einem der vorangegangenen Ansprüche 13 bis 17, wobei die Oszillatoren (Q1,Q2) Quartzoszillatoren sind.

19. Identifikationssystem (IS) mit einem Schreib-/Lesegerät (SLG) und zumindest einem mobilen Datenspeicher (DT) nach einem der Ansprüche 13 bis 18.

## Claims

1. Method for reducing the power consumption (IB) of a mobile data memory (DT) for contactless data transmission (SDAT, LDAT) with a read/write device (SLG), which contains at least one energy accumulator (BA) and consumers (EMP, SEND, Q1, Q2, C, MEM), **characterized in that** the power is supplied to the data memory (DT) at least for a cyclic (T) inactive idle mode (If1, IR) with a first clock frequency (f1) of a first oscillator (Q1) and for receiving data at least during a cyclic polling time (TA) with a second higher clock frequency (f2) of a second oscillator (Q2).

2. Method in accordance with claim 1, in which the higher clock frequency (f2) is used for data demodulation of a receive signal (ES).

3. Method in accordance with claim 2, in which, within the cyclic (T) polling time (TA), a level of the receive signal (ES) is measured and the receive signal (ES1) is then data demodulated if a minimum level is present.

4. Method in accordance with claim 3, in which the second clock frequency (f2) is switched off again in the event of no minimum level being present.

5. Method in accordance with one of the previous claims 2 to 4, in which the data demodulation of the receive signal (ES) is ended in the event of the demodulated read data (LDAT) being invalid.

6. Method in accordance with claim 5, in which the second clock frequency (f2) is switched off again if the read data (RDAT) is invalid.

7. Method in accordance with one of the previous claims 2 to 6, in which, at the start of the polling time (TA) and prior the data demodulation of the receive signal (ES), the second clock frequency (f2) is switched with an initial transient time (TV).

8. Method in accordance with one of the previous claims, whereby the second clock frequency (f2) is a multiple, especially at least 5 times, of the first clock frequency (f1).

9. Method in accordance with claim 8, where the second clock frequency (f2) is 40 times the first clock frequency (f1).

10. Method in accordance with one of the previous claims, whereby the first clock frequency (f1) is used for sending the data (SDAT).

11. Application of the method in accordance with one the previous claims in an identification system based on the ISO/IEC 18000 standard for operation in an ISM frequency band.

12. Application of the method in accordance with claim 11, in which the identification system is operated in an ISM frequency band of 2.45 GHz.

13. Mobile data memory (DT) for data transmission to a read/write device (SLG), which features at least one antenna (SA, EA), a data receiver (EMP) and data sender (SEND) connected to it, an energy accumulator (BAT) for energy supply, **characterized in that** the data memory further features a first oscillator (Q1) with a first clock frequency (f1), especially for a timer (TIMER) and the data sender (SEND) of the data memory (DT), a second oscillator (Q2) with a second higher clock frequency (f2) especially for the data receiver (EMP), and a control unit (C), which at intervals connects (S1,S2) circuit parts (EMP, SEND) of the data memory (DT) to the energy accumulator (BAT) and which at least during a cyclic (T) polling time (TA) connects (S3) the second oscillator (Q2) to the energy accumulator (BAT).

14. Mobile data memory (DT) in accordance with claim 13, in which the data receiver (EMP) features a data demodulator (DM) for data demodulation of a receive signal (ES) originating from the antenna (EA), which can be switched (S1) from the control unit (C) to the energy accumulator (BAT).

15. Mobile data memory (DT) in accordance with claim 14, whereby the data receiver (EMP) features a level detector (PD) for measuring the level of the receive signal (ES), which is switchable (S2) from the control unit (C) to the energy accumulator (BAT) .

16. Mobile data memory (DT) in accordance with one of the claims 13 to 15, with electronic switching means (S1-S3), which can be controlled by the control unit (C).

17. Mobile data memory (DT) in accordance with one of the previous claims 13 to 16, with a timer (TIMER).

18. Mobile data memory (DT) in accordance with one of the previous claims 13 to 17, in which the oscillators (Q1, Q2) are quartz oscillators.

19. Identification system (IS) with a read/write device (SLG) and at least one mobile data memory (DT) in accordance with one of the claims 13 to 18.

## Revendications

1. Procédé pour la réduction de la consommation de courant (IB) d'une mémoire de données mobile (DT) qui est destinée à la transmission de données sans contact (SDAT, LDAT) avec un appareil d'écriture et de lecture (SLG) et qui contient au moins un accumulateur d'énergie (BAT) et des consommateurs (EMP, SEND, Q1, Q2, C, MEM), **caractérisé par le fait que** la mémoire de données (DT) est alimentée au moins pour un mode de repos inactif (If1, IR) cyclique (T) avec une première fréquence d'horloge (f1) d'un premier oscillateur (Q1) et pour la réception de données au moins pendant un temps d'interrogation cyclique (TA) avec une deuxième fréquence d'horloge supérieure (f2) d'un deuxième oscillateur (Q2).

2. Procédé selon la revendication 1, dans lequel la fréquence d'horloge supérieure (f2) sert à la démodulation de données d'un signal reçu (ES).

3. Procédé selon la revendication 2, dans lequel, à l'intérieur du temps d'interrogation (TA) cyclique (T), on mesure un niveau du signal reçu (ES) puis on démodule les données du signal reçu (ES) si on a un niveau minimal.

4. Procédé selon la revendication 3, dans lequel on déconnecte à nouveau la deuxième fréquence d'horloge (f2)

5. Procédé selon l'une des revendications précédentes 2 à 4, dans lequel on met fin à la démodulation de données du signal reçu (ES) si les données lues démodulées (LDAT) sont invalides.

6. Procédé selon la revendication 5, dans lequel on déconnecte à nouveau la deuxième fréquence d'horloge (f2) en présence de données lues invalides (RDAT).

7. Procédé selon l'une des revendications précédentes 2 à 6, dans lequel, au début du temps d'interrogation (TA) et avant la démodulation de données du signal reçu (ES), on connecte la deuxième fréquence d'horloge (f2) un temps de préparation transitoire (TV) avant.

8. Procédé selon l'une des revendications précédentes, dans lequel la deuxième fréquence d'horloge (f2) est un multiple de la première fréquence d'horloge (f1), notamment au moins 5 fois celle-ci.

9. Procédé selon la revendication 8, dans lequel la deuxième fréquence d'horloge (f2) est 40 fois la première fréquence d'horloge (f1).

10. Procédé selon l'une des revendications précédentes, dans lequel la première fréquence d'horloge (f1) sert à l'émission des données (SDAT).

11. Utilisation du procédé selon l'une des revendications précédentes dans un système d'identification sur la base du standard ISO/IEC 18000 pour une exploitation dans une bande de fréquence ISM.

12. Utilisation du procédé selon la revendication 11, telle que le système d'identification est exploité dans une bande de fréquence ISM de 2,45 GHz.

13. Mémoire de données mobile (DT) qui est destinée à la transmission de données vers un appareil d'écriture et de lecture (SLG) et qui comporte au moins une antenne (SA, EA), un récepteur de données (EMP) et un émetteur de données (SEND) reliés à celle-ci, un accumulateur d'énergie (BAT) pour l'alimentation en énergie, **caractérisée par le fait que** la mémoire de données comporte aussi un premier oscillateur (Q1) avec une première fréquence d'horloge (f1) notamment pour un temporisateur (TIMER) et pour l'émetteur de données (SEND) de la mémoire de données (DT), un deuxième oscillateur (Q2) avec une deuxième fréquence d'horloge supérieure (f2) notamment pour le récepteur de données (EMP) et une unité de commande (C) qui connecte (S1, S2) de temps en temps des parties de circuit (EMP, SEND) de la mémoire de données (DT) à l'accumulateur d'énergie (BAT) et qui connecte (S3) au moins pendant un temps d'interrogation (TA) cyclique (T) le deuxième oscillateur (Q2) à l'accumulateur d'énergie (BAT).

14. Mémoire de données mobile (DT) selon la revendication 13, dans laquelle le récepteur de données (EMP) comporte un démodulateur de données (DM) qui est destiné à la démodulation de données d'un signal reçu (ES) provenant de l'antenne (EA) et qui peut être connecté (S1) par l'unité de commande (C) à l'accumulateur d'énergie (BAT).

15. Mémoire de données mobile (DT) selon la revendication 14, dans laquelle le récepteur de données (EMP) comporte un détecteur de niveau (PD) qui est destiné à la mesure de niveau du signal reçu (ES) et qui peut être connecté (S2) par l'unité de commande (C) à l'accumulateur

16. Mémoire de données mobile (DT) selon l'une des revendications 13 à 15, avec des moyens commutateurs électroniques (S1 à S3) qui sont commandables par l'unité de commande (C).

17. Mémoire de données mobile (DT) selon l'une des revendications précédentes 13 à 16, avec un temporisateur (TIMER).

18. Mémoire de données mobile (DT) selon l'une des revendications précédentes 13 à 17, dans laquelle les oscillateurs (Q1, Q2) sont des oscillateurs à quartz.

19. Système d'identification (IS) avec un appareil d'écriture et de lecture (SLG) et avec au moins une mémoire de données mobile (DT) selon l'une des revendications 13 à 18.
